# EUROPEAN PATENT APPLICATION

(11) **EP 1 676 744 A1**
(43) Date of publication of application: **05.07.2006**
(21) Application number: 04380298.2
(22) Date of filing: 31.12.2004
(51) Int. Cl.: B60N 2/46

(54) **Height adjustable armrest for a vehicle door**

(71) Applicant: Grupo Antolin Ingenieria, S.A., 09007 Burgos (ES)
(72) Inventor: Dominguez Rubio, Francisco, 09007 Burgos (ES); Saez Azofra, Fernando, 26004 Logrono (ES); Valladolid Diez, Matilde, 09006 Burgos (ES)
(74) Representative: Carpintero Lopez, Francisco

(57) **Abstract**

Height adjustable armrest for fittings of vehicle doors, which comprises an anchor element (1) which is fastened to the interior structure of sheet metal and a support element (2) on which the user rests his arm and which incorporates a button pad (21) which comprises an upper end (18) of an operating lever (14). Between the two elements (1,2) a support structure is mounted which pushes the support element (2), the thrust of which while the said upper end (18) of the operating lever (14) is not actuated will be cancelled, the support element (2) remaining stationary, through some locking means which the user can unlock by displacing said upper end (18). When the locking means are released the support element (2) rises unless the user applies a pressure thereon, being displaced therefore downwards. On releasing the upper end (18) of the operating lever (14) the support element (2) remains fixed at the selected height.

## Description

### OBJECT OF THE INVENTION

The present invention relates to an adjustable armrest of those installed in the fittings of vehicle doors.

The armrest object of said invention has a mechanism that allows its height to be adjusted in a quick and simple manner, increasing the comfort of the occupants of the vehicle.

### BACKGROUND OF THE INVENTION

Vehicle door armrests are known which are adjustable in height to facilitate their adaptation to the position which the user considers most appropriate for supporting his arm, there being mechanisms for manual operation and others power-driven.

Among the power-driven mechanisms those contemplated in the patents which are described below are noteworthy:
The Patent of Invention DE 201 20 959 refers to a height adjustable armrest for a passenger cars which incorporates a motor-driven scissor mechanism, the movement of the motor being associated with the displacement of the lower extremity of one of the arms which comprise the scissor mechanism, the lower extremity of the other arm hinged with respect to a fixed point and the upper extremities of these arms in connection with the armrest, in such a way that the longitudinal displacement of the lower extremity of the arm connected with the motor determines the closing or opening movement of the scissor mechanism and in consequence the raising or lowering of the armrest.
The Patent of Invention US 6 796 601 refers to an armrest subassembly for a vehicle door which is motor-driven. The motor acts on a revolving spindle which defines the vertical displacement of a shell connected with the armrest structure and therefore produces the raising or lowering thereof.

On the other hand the Patent of Invention US 5 921 610 also contemplates the possibility of incorporating a motor which is used, in a possible embodiment as a means of operating a scissor mechanism for vertical displacement of an armrest, and in another possible embodiment it acts on a vertical spindle mounted in a structure with vertical displacement also in relation with the armrest. Other solutions for operation consist in using a pump the outlet of which is applied to a bellows on which the base of an armrest structure is mounted, in such a way that the output pressure of the pump defines a thrust on the base of said structure modifying the position of the armrest in height.

The incorporation of a motor results in an increase in weight, cost and mechanical complexity in contrast to manual type operating systems.

Regarding manually operated armrests, attention is drawn to the Patent of Invention DE 40 02 242 which relates to an armrest which tilts around a hinge, which is also displaceable in the horizontal direction to produce the rotation of the armrest and the raising or lowering movement thereof guided by two rails.

### DESCRIPTION OF THE INVENTION

The height adjustable armrest for a vehicle door of the invention comprises a support element, on which the driver rests, which is mounted on a supporting structure, consisting of a pair of arms hinged to each other and linked to the vehicle door through an anchor plate. The support element can include pushbuttons or other control elements, as is habitually found today in vehicle armrests.

The supporting structure, to which the front support element is joined, is configured so that said support element can be displaced between an upper position and an upper position, allowing the user to select between said positions that which is most comfortable for him in terms of his height, build and position of the seat inside the vehicle compartment.

The supporting structure additionally comprises means of locking which impede the displacement of the support structure allowing the position of the support element to be fixed selectively at different heights. These means of locking can be disengaged manually by the user through some operating means associated with the support element so that to alter the height of the armrest, the user has to act on the manual operating means which produces the release of the means of locking so that by simply pulling the support element upwards or pushing it downwards the displacement of the armrest is achieved in one direction or another. When the desired position has been reached, the user stops acting on the manual operating means which causes the activation of the locking means and the retention of the support structure in the position reached.

In short, the support structure comprises at least one pair of arms which are mounted between an anchor plate and the support element, the arms being joined to the anchor plate and to the support element by means of respective hinged couplings and so that the two arms of said pair of arms cross over in a main hinge through which they are joined so that one arm can rotate with respect to the other about said main hinge in scissor fashion.

That is, the support structure comprises at least two arms, which forming a pair, are considered sufficient in certain embodiments. The possibility is contemplated that the number of pairs of arms be greater, the support structure then comprising two, three or even more pairs of arms, extending from the anchor plate up to the support element which, when the armrest is installed in a vehicle door, is located above the anchor element. Whatever the number of pairs of arms of those which constitute the structure, the two arms of each pair of arms are mounted in a mutually crossing arrangement, the structure adopting a scissor-type configuration.

In addition, the support element can comprise at least one groove which is configured to house a sliding element associated with one of the arms of the support structure, so that said sliding element and said groove establish the hinged coupling between the support structure and the support element. Said sliding element is displaceable from a first position corresponding to the lower position of the support element to a second position corresponding to the upper position of the support element, which displacement takes place when the means of locking so allow, as will be seen later. The movement of the displacement element through the groove, causes a turning movement to be transmitted to the other arm through the scissor-type main hinge, so that the upper hinged couplings of each arm with the support element displace the support element upwards, because they transmit a thrust thereto.

The locking means which, as previously stated, lock the support element in the position selected between the lower position and the upper position, comprise a first locking element and a second locking element.

The first locking element is associated with at least one of the arms of each pair of arms, while the second locking element is associated with the support element. Both locking elements, both the first and the second, have complementary surfaces, both elements being arranged so that said surfaces face each other and have the possibility of engaging when the two locking elements adopt relative positions with respect to each other that so permit. The second locking element is displaceable between a non-engaging position, in which it is not in contact with the first locking element, and an engaging position with the first locking element, in which position the complementary surfaces of both elements engage, so that in the engagement position the support element is locked in a locking position. In said locking position swivelling is impeded with respect to the support element of the arm with which the first locking element is associated, which prevents said support element from being displaced to reach an upper or lower position. In a possible embodiment of the invention the two complementary surfaces of the first locking element and of the second locking element correspond to toothed rims which can mesh in each other.

The two locking elements are usually engaged impeding the movement of the support element so that to allow said movement they have to be disengaged, for which purpose said locking means comprise operating means associated with the support element and arranged to be capable of actuated by a user, so that, in response to an operation by the user, the second locking element is displaced toward its non-engagement position and the raising or lowering of the support element is allowed in accordance with the application of a vertical force on the support element. The correct location of said operating means inside the compartment is important so that the user can work them in a simple manner and without having to divert his attention, for which purpose the operating means can be installed in the actual support element, within reach of the user's hand.

The locking means can additionally comprise a blocking spring associated with the operating means and arranged to displace the second locking element toward its engagement position. In this way it is assured that the first locking element and the second locking element will be in contact, and therefore engaged in a locking position, as long as the user does not actuate the means of operation, it being necessary for the user to overcome a very weak force in order to release the locking means, which force being that corresponding to said blocking spring.

The operating means through which the user can release the locking means and thereby alter the height of the armrest can have multiple configurations. A possible configuration comprises an operating lever configured for, in response to an operation of a user on an end of said lever, displacing the other end of said lever from a first position to a second position in a guided manner through a channel associated with the second locking element. The end of the operating lever on which the user acts, is usually in the button pad which is incorporated in the support element and which, together with said ergonomic operation of the armrest, can incorporate other vehicle controls, such as the controls of the window regulators or the locks of the doors. The opposite end of the lever is displaced in a channel included in the second locking element, so that said displacement causes the swivelling of said second locking element. Thus, when the user is not acting on the end of the operating lever, the other end of said lever is in a certain position of the channel of the second locking element, which is engaged with the first locking element, impeding the vertical displacement of the support element with respect to the anchor plate. When the user acts on the end of the operating lever, overcoming the resistance of the blocking spring, the other end of the lever is displaced from the previous position to a second position, this displacement causing the second locking element to pivot and move away from the first locking element, leaving both elements disengaged.

As for the configuration of the arms constituting each pair of arms, in a possible embodiment each arm comprises two segments arranged so that they form a certain fixed angle between them and the vertex of said angle corresponding with the main hinge through which the two arms constituting each pair of arms are coupled.

To facilitate the operation of the armrest, it has been foreseen that optionally the support structure comprises a spring means mounted to displace the support element toward its upper position, so that a displacement of the support element toward the upper position can be carried out due to a displacement force applied by the spring means, and so that a displacement of the support element toward the lower position will have to be carried out against said displacement force applied by the spring means, which are selected so that said force is not very strong, operation being comfortable and simple.

That is, the tendency of the support structure would be that of displacing the support element to its upper position, although the locking means impede said displacement unless they are disabled by the user, by acting on the means of manual operation. For this reason, the force that the user has to provide to raise the armrest is nil, he need only disable the locking means, whilst the force to displace the support element downwards with respect to the initial position is small, which feature permits a comfortable manual adjustment of the height of said support element, with no need for motors to displace said element.

In short, the spring means are mounted between one of the arms of each pair of arms and the support element, the spring means being arranged so that they apply a pulling force on said arm.

To allow and facilitate the fastening of the armrest to the vehicle door, a number of fastening elements have been foreseen in the anchor element included in the support structure.

Another aspect of the invention comprises a vehicle door which comprises an interior structure of sheet metal on which is fastened an adjustable armrest like that described and fittings configured so as to cover the support structure and leaving only the support element visible from the interior of the vehicle, as if it were a conventional fixed armrest.

### DESCRIPTION OF THE DRAWINGS

To complete the description which is being made and with the object of assisting in a better understanding of the characteristics of the invention, in accordance with a preferred practical embodiment thereof, said description is accompanied with a set of drawings as an integral part thereof, wherein by way of illustration and not restrictively, the following has been represented:

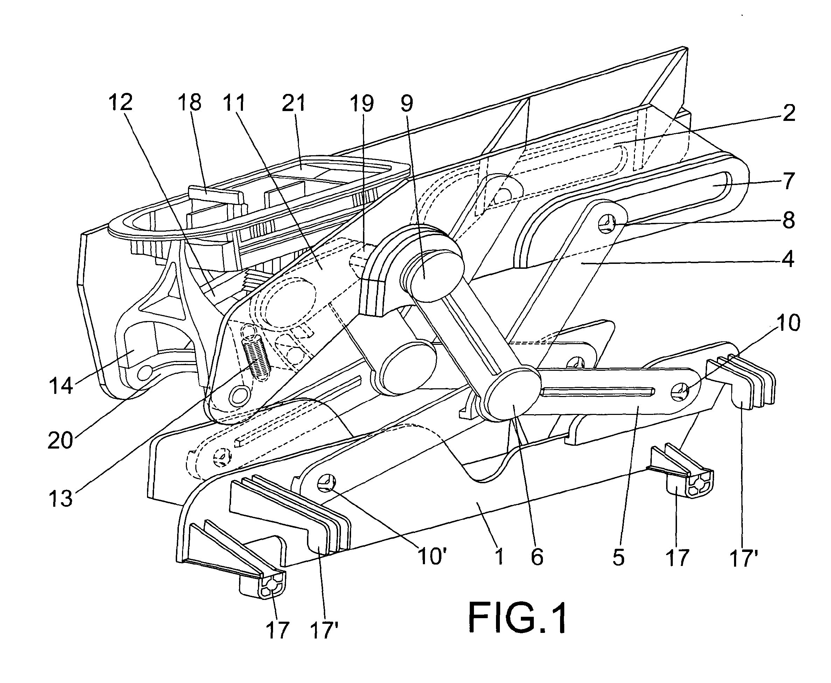

Figure 1. - It shows a view in perspective of the armrest in the raised position, omitting the springs for greater clarity.
Figure 2. - It shows a side view of the armrest in the lower position.
Figure 3. - It shows a side view of the armrest in the upper position.
Figure 4. - It shows a detail of the armrest in which the means of retention is appreciated locking the regulation mechanism.
Figure 5. - It shows a detail of the armrest in which the means of retention is appreciated when the operating means are being actuated, releasing the elevation mechanism.

### PREFERRED EMBODIMENT OF THE INVENTION

In the light of the figures, an example of embodiment of the invention can be observed therein which consists of a height adjustable armrest of those incorporated on the interior part of vehicle doors.

The armrest object of said invention comprises a fixed anchor plate (1) which is fastened to the interior structure of sheet metal of the vehicle door by means of fastening elements (17, 17') which it incorporates for such purpose, and a support element (2) which can be similar in form to the conventional non-adjustable armrests which are habitually incorporated in automobiles. Although in the figures which accompany this description the fittings have been omitted to facilitate appreciation of the assembly, when the armrest is installed in the vehicle door said fittings are mounted on the support element (2) so that the internal mechanism of the armrest is covered.

Between the anchor plate (1) and the support element (2) a support structure is located, which is the mechanism of the armrest which allows the displacement of the support element (2) with respect to the anchor plate (1). It is also in said intermediate space where the locking means are located which, as the name indicates, impede the displacement of the support element (2) provided the operating means are not being actuated, as will be seen below.

In the embodiment shown in the figures the support structure comprises two pairs of arms (4, 5), an appropriate embodiment for average-sized vehicles, although the possibility is contemplated that said support structure comprises a single pair of arms or more than two pairs, choosing in each case the most convenient embodiment in terms of the size of the vehicle or of other factors that can arise.

In said preferred embodiment each of the two arms (4, 5) of each pair of arms is incorporated from two straight segments joined at one point and forming a determined angle between them, therefore adopting a V-form. The two arms (4, 5) constituting each pair of arms are joined in a main hinge (6) which corresponds to the point in which the two straight segments of each arm are joined.

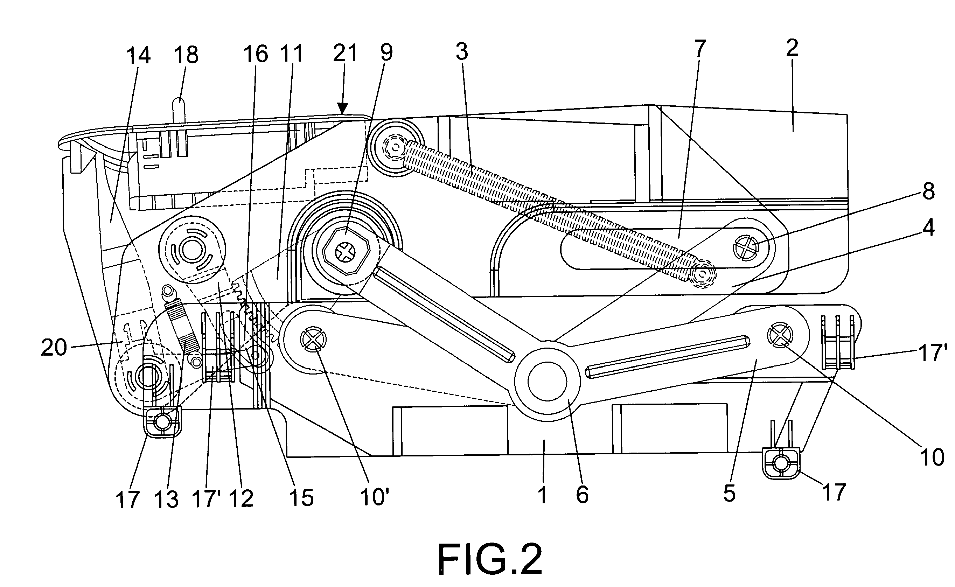

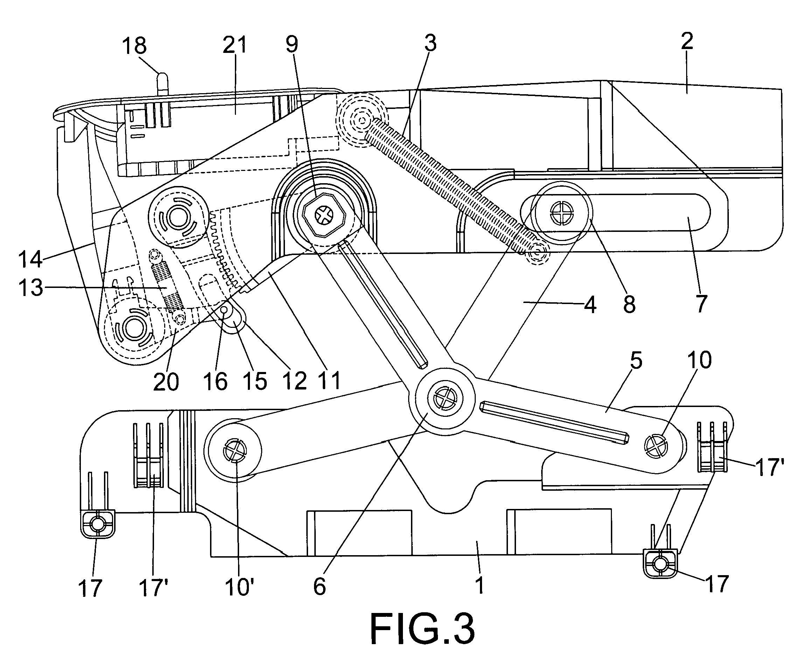

The support arms (4), (5) are joined to the anchor plate (1) through individual lower hinged couplings (10), (10'), whilst one of the arms (5) is joined to the support element (2) through two upper hinged couplings (9), through a common axle (19), while the arms (4) incorporate a sliding element (8) by way of a shell which can slide in a groove (7) which the support element (2) incorporates for this purpose. In this way, the upper end of each arm (4) can slide between a starting position, represented in figure 2, and an end position of said groove (7), represented in figure 3.

Optionally, as observed in figures 2 and 3, in the area proximate to the upper end of the arms (4) some spring means (3) are mounted, the opposing end of which is joined to the support element (2). The spring means (3) apply the necessary pulling action on each arm (4) so that the sliding element (8) of each of them is displaced along the interior of the groove (7) and applies a thrust on the support element (2), which will therefore tend to rise with respect to the anchor plate (1), which situation will arise when the operating means included in the locking means are being actuated and sufficient resistance is not being applied on the support element (2) to counteract the pulling force of the spring means (3).

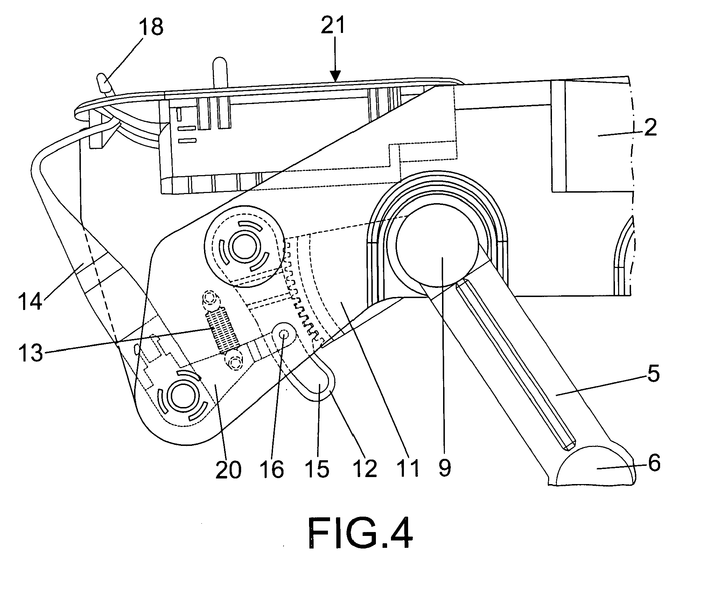

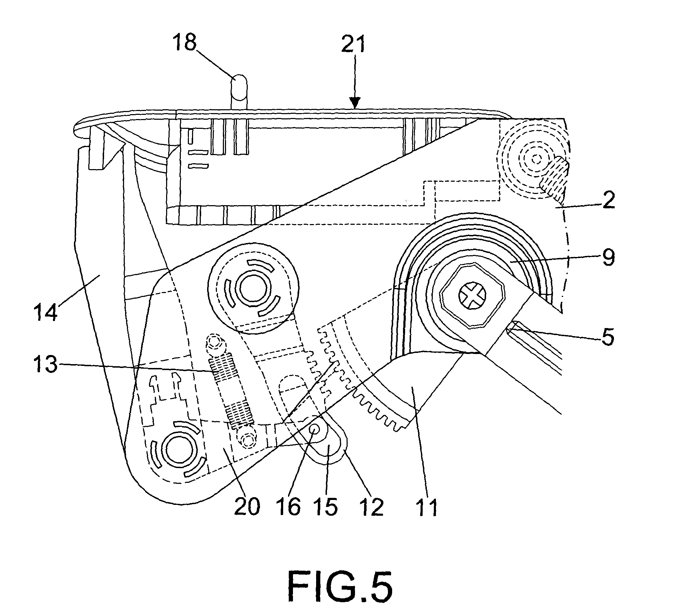

The locking means, as the name indicates, are those which retain the support element (2) in the position which it is in, impeding the vertical movement thereof and cancelling the force of the spring means (3) unless the user is actuating the operating means which are incorporated for such purpose. Figures 4 and 5 represent said means of locking in two different positions: figure 4 represents the situation in which the operating means are not being actuated, the locking means therefore blocking the elevation of the support element (2), while figure 5 shows the opposite case in which the operating means are actuated and the locking means disengaged, releasing the elevation mechanism termed support structure. In this preferred embodiment, and for simplicity in assembly, the operating means comprise two elements: an operating lever (14) and a transmission element (20) which are integrally joined.

In a simpler embodiment which does not incorporate the spring means (3), the displacement of the support element, when the locking means have been released through the operating means, has to be carried out by the user, by pulling upwards or pushing downwards on the support element.

The operating lever (14) is a piece in the form of an inverted L which on its upper extremity has an end (18), which can have an ergonomic design to facilitate its operation. Said end (18) in this embodiment is located in the button pad (21) which vehicle door armrests incorporate, which button pad (21) usually includes other controls for operating mechanisms of the automobile, such as the window regulators or the door locks. This position of the end (18) of the operating lever (14) facilitates its operation, which is carried out by displacing the end (18) from a more forward position to another further behind, because it is within reach of the vehicle occupant's hand, satisfying also the ergonomic criteria for operating mechanisms.

The displacement of the upper end (18) of the operating lever (14) is converted into a rotation of said operating lever (17), which rotation is transmitted to the transmission element (20) which is joined to the lower end of said operating lever (14), forming a right angle with it. A blocking spring (13) is incorporated as element opposing this rotational movement of the transmission element (20), which spring as its name indicates and will be seen in more detail later, retains the locking means in their position blocking the elevation. Only when the user displaces the upper end (18) of the operating lever (14) from the forward position in which it is usually found on the button pad (21) to another position further behind will the resistance offered by the blocking spring (13) be overcome and the turning movement of the operating elements allowed, the free end (16) thereof describing an arc of a circle.

The free end (16) of the operating means is configured so that it slides through the interior of a channel (15) which the second locking element (12) incorporates which in this preferred embodiment is a pawl which is joined in a hinged manner to the support element (2) of the armrest, so that it can rotate about this point of linkage. Thus, when the user displaces the upper end (18) of the operating lever (14) from a forward position to another position further behind, the free end (16) of the operating means describes an arc of a circle from an initial position to another final, lower position, and the second locking element (12) rotates from the locking position, represented in figure 4, to the unlocked position, represented figure 5.

The lateral surface of the second locking element (12) has a number of teeth complementary with those of the lateral surface of the first locking element (11) which is facing the second locking element (12). Thus, when the operating means are not being actuated, both locking elements (11, 12) are engaged, the second locking element (12) impeding the turning of the first locking element (11) which is joined to an axle (19) which runs between the upper hinged couplings (9) of the support arm (5) of each pair of arms. However, when the operating means are actuated, the second locking element (12) rotates and withdraws, disengaging its teeth with respect to those of the first locking element (11), which is left free and then rotates around the axle (19). In this way the disengagement takes place of the locking means with respect to the support structure, which is left free and transmits a thrust to the support element (2) of the armrest which is converted into an elevation of the latter with respect to the anchor element (1).

When the support element (2) has reached the desired height, it is sufficient to release the upper end (18) of the operating lever (14) for the blocking spring (13) to pull the transmission element (20) into the locking position, said transmission element (20) transmitting a turning movement to the second locking element (12) through its free end (16), which rises up through the interior of the channel (15) of the second locking element (12). The turning of the second locking element (12) causes the engaging of its teeth with those of the first locking element (11), which is thereby retained, the elevation of the support element (2) being halted.

In the event that, starting from a raised position of the support element (2), the user wishes to displace it downwards, it is necessary to disable the locking means, displacing to do so the upper end (18) of the operating means, and applying a slight pressure on the support element (2), which is displaced downwards. Advantageously, the force that it is necessary to apply is very small, since it need only overcome the traction applied by the spring means (3).

## Claims

1. - Height adjustable armrest for a vehicle door which comprises a support element (2) and a support structure (4, 5), linked to the door by means of fastening elements (17, 17'), on which the support element (2) is mounted, the support structure (4, 5) being configured so that the support element (2) can be displaced between a lower position and an upper position, **characterized in that** it comprises:
- An anchor plate (1) through which the support structure (4, 5) is fastened to the vehicle door.
- A support structure which comprises at least one pair of arms (4, 5).
- Locking means (11, 12) which impede the displacement of the support structure (4, 5).
Manual operating means (14), associated with the support element (2), for the disabling of the locking means (11) and (12).

2. - Armrest according to claim 1, in which at least one pair of arms (4, 5) is mounted in a hinged manner between the support element (2) and the anchor plate (1), and the two arms (4, 5) of said pair of arms cross over in a main hinge (6) through which they are joined so that one arm can rotate with respect to the other about said main hinge (6).

3. - Armrest according to claim 2, in which the support element (2) has a groove (7), configured to house a sliding element (8) associated with one of the arms (4, 5), so that said sliding element (8) and said groove (7) establish the hinged coupling between the aforementioned arm (4, 5) and the support element (2), said sliding element (8) being displaceable from a first position corresponding to the lower position of the support element (2) to a second position corresponding to the upper position of the support element (2).

4. - Armrest according to claim 2, in which the locking means comprise a first locking element (11) associated with at least one of the arms (4, 5) and a second locking element (12) associated with the support element (2), the first locking element (11) and the second locking element (12) having complementary engaging surfaces and the second locking element (12) being displaceable between a non-engaging position and an engaging position with the first locking element (11), in which position the tilting of the arms (4, 5) is impeded.

5. - Armrest according to claim 4, in which the first locking element (11) and the second locking element (12), in the locking position, impede the swivelling, with respect to the support element (2), of at least one of the arms (4, 5) with which the first locking element (11) is associated.

6. - Armrest according to claim 4, in which the manual operating means (14) displace the second locking element (12) toward its non-engaging position.

7. - Armrest according to claim 6, in which the locking means additionally comprise a blocking spring (13) associated with the operating means (14) and arranged to displace the second locking element (12) toward its engaging position.

8. - Armrest according to claim 4, in which the operating means comprise an operating lever (14), mounted in a hinged manner on the support element (2), which lever has one end (18) which emerges outwardly for the operation thereof by the user and a second end (16) which can occupy two different positions as a consequence of the tilting of the aforementioned operating lever (14), sliding on the inside of a channel (15) of the second locking element (12).

9. - Armrest according to claim 8, in which the second locking element (12) is configured so that a displacement of the free end (16) of the operating lever (14), in a guided manner through the channel (15) associated with the second locking element (12), causes a swivelling of the second locking element (12).

10. - Armrest according to claim 1 in which each of the two arms (4, 5) of each pair of arms comprises two straight segments arranged so that a determined angle is formed between them and the vertex of said angle corresponding to the main hinge (6).

11. - Armrest according to any one of claims 4 to 10, in which the first locking element (11) has a toothed rim to mesh with a toothed rim on the second locking element (12).

12. - Armrest according to any one of claims 4 to 10, in which the second locking element (12) is mounted in pivotable form so that it can swivel between the engaging position and the non-engaging position.

13. - Armrest according to claim 1, in which the anchor plate (1) comprises elements (17, 17') for the fastening thereof to the vehicle door.

14. - Armrest according to claim 1, which comprises additionally spring means (3) which pull the support structure (4, 5) constantly upwards.

15. - Armrest according to claim 14 in which the spring means (3) are mounted between the support element (2) and some of the arms (4, 5).

16. - Vehicle door which comprises:
an armrest according to any one of the previous claims;
an interior structure of sheet metal to which said armrest is fastened; and
fittings configured so that they cover at least the support structure.
